# EUROPÄISCHE PATENTSCHRIFT

(11) **EP 3 041 661 B1**
(45) Veröffentlichungstag und Bekanntmachung des Hinweises auf die Patenterteilung: **11.04.2018**
(21) Anmeldenummer: 14742539.1
(22) Anmeldetag: 25.07.2014
(51) Int. Cl.: B41J 3/407, B65C 9/00

(54) **VORRICHTUNG ZUM AUSRICHTEN VON KOMPONENTEN EINER RUNDLÄUFERMASCHINE**
DEVICE FOR ADJUSTMENT OF COMPONENTS OF A ROTARY MACHINE
DESPOSITIF D'ALIGNER DES COMPOSANTS D'UNE MACHINE ROTATIF

(30) Priorität: 04.09.2013 DE 102013217674
(43) Veröffentlichungstag der Anmeldung: 13.07.2016
(73) Patentinhaber: KRONES Aktiengesellschaft, 93073 Neutraubling (DE)
(72) Erfinder: PEUTL, August, 93073 Neutraubling (DE); NEUBAUER, Michael, 93073 Neutraubling (DE)
(74) Vertreter: Grünecker Patent- und Rechtsanwälte PartG mbB
(86) Internationale Anmeldenummer: PCT/EP2014/066021
(87) Internationale Veröffentlichungsnummer: WO 2015/032548

(56) Entgegenhaltungen:
- EP-A1- 1 561 690
- EP-A2- 2 511 205
- WO-A1-99/08935
- WO-A2-97/20738
- DE-A1-102009 041 527
- DE-A1-102011 009 393

## Beschreibung

Die vorliegende Erfindung betrifft eine Vorrichtung und ein Verfahren zum Ausrichten von Komponenten einer Rundläufermaschine wie beispielsweise einer Behälterbehandlungsmaschine.

### Stand der Technik

Vorrichtungen zum Ausrichten einzelner Komponenten einer Behälterbehandlungsmaschine sind aus dem Stand der Technik bereits bekannt. So zeigt die DE 10 2009 035 880 A1 Ausrichtsysteme zum Ausrichten von an einer Behälterbehandlungsmaschine angebrachten Behandlungsmodulen. Dazu werden zwei beispielsweise als Laserpointer ausgeführte optische Hilfsmittel am Behandlungsmodul und Markierungsfelder an der Behälterbehandlungsmaschine, die beispielsweise im Rahmen oder am Rotor der Behäfterbehancflungsmaschine angeordnet sein können, vorgesehen. Über die entsprechende Entfernungsbestimmung der Behandlungsmodule zu den vorgesehenen Markierungsfeldern kann die Ausrichtung bestimmt und gegebenenfalls korrigiert werden. Diese Vorgehensweise erweist sich jedoch als ausgesprochen aufwändig, da für jedes Behandlungsmodul entsprechende Markierungsfelder und Laserpointer vorgesehen werden müssen.
Ferner zeigt die DE 10 2011 112 281 B3 eine Vorrichtung zum Behandeln von Packmittel, wobei einzelne Behälterbehandlungsmodule vorgesehen sind, die beispielsweise über Verbindungen miteinander fixiert werden können. Es besteht jedoch die Gefahr, dass beim Fixieren der einzelnen Module untereinander geringfügige Fehlstellungen auftreten, die dann im Rahmen eines Nachjustageverfahrens ausgeglichen werden müssen. Dieses kann unter Umständen sehr zeitaufwändig sein.

Die WO 99/08935 zeigt eine Behälterbehandlungsmaschine in der Behandlungsmodule zu den zu behandelnden Behältern, basierend auf Messungen von Abstandssensoren, ausgerichtet werden.

### Aufgabe

Ausgehend vom Stand der Technik ist es Aufgabe der vorliegenden Erfindung, eine Vorrichtung zum Ausrichten von Komponenten einer Rundläufermaschine bereitzustellen, wobei diese Vorrichtung ein möglichst einfaches Ausrichten der Komponenten der Rundläufermaschine ermöglichen soll und gleichzeitig konstruktiv möglichst einfach in Rundläufermaschinen einzubinden ist.

### Lösung

Diese Aufgabe wird erfindungsgemäß durch die Vorrichtung zum Ausrichten von Komponenten einer Rundläufermaschine nach Anspruch 1 und das Verfahren zum Ausrichten von Komponenten einer Rundläufermaschine nach Anspruch 8 gelöst. Vorteilhafte Weiterbildungen der Erfindung sind in den Unteransprüchen erfasst.
Die erfindungsgemäße Vorrichtung zum Ausrichten von Komponenten einer Rundläufermaschine, wie beispielsweise einer Behälterbehandlungsmaschine, wobei die Rundläufermaschine einen Stator und einen Rotor, sowie wenigstens eine, am Stator angeordnete Komponente umfasst, umfasst wenigstens ein Referenzelement, das am Stator angeordnet ist, und einen Sensor, der am Rotor mitdrehbar angeordnet ist, wobei der Sensor geeignet ist, den Abstand zum Referenzelement und zu der Komponente zu messen und Stator, Rotor und Komponente zueinander, basierend auf den vom Sensor gemessenen Werten, ausgerichtet werden können. Auf diese Weise muss nur ein Sensor vorgesehen werden, der durch Drehung des Stators an die entsprechenden Positionen geführt werden kann, um die Ausrichtung entsprechender Komponenten zu messen.
Gemäß einer Ausführungsform kann der Sensor den Abstand zwischen Sensor und Referenzelement und/oder Komponente bestimmen während die Rundläufermaschine stillsteht und/oder der Rotor der Rundläufermaschine bewegt wird. Für gewöhnlich erfolgt eine Justage der einzelnen Komponenten und insbesondere die korrekte Ausrichtung während die Rundläufermaschine stillsteht. In diesem Fall genügt es, wenn der Sensor die Ausrichtung der einzelnen Komponenten bei stillstehender Vorrichtung vermessen kann. Es kann sich jedoch als vorteilhaft erweisen, wenn der Sensor auch die Ausrichtung der Komponenten bestimmen kann, während die Rundläufermaschine im Betrieb ist. So können auftretende Abweichungen aufgrund von Vibrationen in der Maschine gemessen und gegebenenfalls kompensiert werden.
In einer Ausführungsform umfasst der Sensor wenigstens eines von einem pneumatisch betriebenen Messtaster, einem optischen Sensor, einem Ultraschallsensor. Je nach Positionierung des Sensors und der zu vermessenden Komponente kann sich eine dieser Ausführungsformen als besonders vorteilhaft erweisen.
In einer weiteren Ausführungsform ist vorgesehen, dass die Ausrichtung von Stator, Rotor und Komponente zueinander manuell oder automatisch erfolgen kann. Aufgrund der mittels des Sensors gewonnenen Daten kann die Justage bzw. das Ausrichten der Komponenten manuell erfolgen. So können auch Erfahrungswerte ausgenutzt werden und z.B. geringere Abweichungen als tolerabel eingestuft werden. Die automatisierte Ausrichtung der Komponenten bietet hingegen den Vorteil, dass die Ausrichtung möglichst exakt erfolgt.

Es ist vorgesehen, dass wenigstens eine Ausrichtvorrichtung vorgesehen ist, die geeignet ist, eine relative Position des Stators zum Rotor durch relative Bewegung von Stator und Rotor zueinander zu ändern. Da Stator und Rotor sehr schwere Bauteile sind, ist eine manuelle Ausrichtung nur mit erheblichem Aufwand möglich. Durch das Vorsehen einer entsprechenden Ausrichtvorrichtung kann dieser Vorgang erleichtert werden.

In einer Ausführungsform ist die Vorrichtung dadurch gekennzeichnet, dass eine Vielzahl von Referenzelementen am Stator angeordnet ist. Auf diese Weise gelingt die Bestimmung der Ausrichtung von Stator und Rotor zueinander deutlich besser, da mehrere Referenzpunkte vorgesehen sind, mit denen die Position des Rotors relativ zum Stator im dreidimensionalen Raum bestimmt werden kann.

Es kann vorgesehen sein, dass die Rundläufermaschine eine Etikettiermaschine oder eine Blasformmaschine oder eine Direktdruckmaschine oder ein Füller oder eine Inspektionsmaschine ist. Auf diese Weise können die Vorteile der Vorrichtung zum Ausrichten von Komponenten einer Rundläufermaschine in vielen Bereichen, insbesondere der getränkeverarbeitenden Industrie genutzt werden.

Weiterhin kann die Vorrichtung dadurch gekennzeichnet sein, dass die Ausrichtvorrichtung die relative Position von Stator und Rotor zueinander in 6 Freiheitsgraden verändern kann. Das macht es möglich, nicht nur translatorische Bewegungen von Stator und Rotor durchzuführen um sie zueinander auszurichten, sondern auch eine Ausrichtung mit Hinblick auf die Rotationsfreiheitsgrade zu gewährleisten.

Unter Verwendung beispielsweise einer der obigen Vorrichtungen kann ein Verfahren zum Ausrichten von Komponenten einer Rundläufermaschine, die einen Stator und einen Rotor und wenigstens eine Komponente umfasst verwirklicht werden, wobei das Verfahren ein Positionieren eines Sensors, der mitdrehbar am Rotor angeordnet ist, auf ein am Stator angeordnetes Referenzelement und eine am Stator angeordnete Komponente umfasst, und wobei das Verfahren das Messen eines Abstandes zwischen dem Sensor und dem Referenzelement und eines Abstandes zwischen dem Sensor und der Komponente umfasst, und wobei Stator, Rotor und Komponente zueinander, basierend auf den vom Sensor gemessenen Werten ausgerichtet werden. Mit diesem Verfahren kann ein deutlich effektiveres und zuverlässigeres Ausrichten der Komponenten einer Rundläufermaschine erzielt werden, verglichen mit dem Stand der Technik.

In einer Ausführungsform des Verfahrens bestimmt der Sensor den Abstand zum Referenzelement und/oder der Komponente, während der Rotor stillsteht oder während der Rotor sich bewegt. Die Anwendung des Verfahrens auf stillstehende Rundläufermaschinen ermöglicht ein korrektes Ausrichten der einzelnen Komponenten während oder nach dem Aufbau der Rundläufermaschine. Die Anwendung des Verfahrens bei im Betrieb befindlichen Rundläufermaschinen erlaubt die Überwachung von auftretenden Abweichungen, beispielsweise durch Vibration oder Erwärmen und gestattet hier gegebenenfalls eine Nachjustage.

In einer Ausführungsform erfolgt das Ausrichten von Stator, Rotor und Komponente zueinander manuell oder automatisch. Die manuelle Einstellung der Ausrichtung erlaubt das Einbeziehen von individuellen Erfahrungen neben den gewonnenen Messwerten durch den Sensor. Die automatische Ausrichtung der Komponenten zueinander kann gegebenenfalls zuverlässiger sein.

Gemäß einer Ausführungsform des Verfahrens wird eine relative Position des Stators zum Rotor durch eine Ausrichtvorrichtung durch relative Bewegung von Stator und Rotor zueinander verändert. Hiermit können die schweren Komponenten Stator und Rotor zueinander ausgerichtet werden, was auf manuelle Weise nur schwer möglich ist.

Es kann vorgesehen sein, dass der Sensor einen Abstand zu einer Vielzahl von Referenzelementen bestimmt. Das gestattet dem Sensor die Ausrichtung des Rotors relativ zum Stator im dreidimensionalen Raum zu bestimmen. Es ist so auch möglich, falsche Ausrichtungen in den Rotationsfreiheitsgraden zu erfassen.

Weiterhin kann das Verfahren umfassen, dass der Sensor einen Abstand zu jedem Referenzelement und/oder jeder Komponente in wenigstens 2 Dimensionen bestimmt. So kann durch das Erfassen möglichst umfangreicher Messdaten gewährleistet werden, dass die Ausrichtung der Komponenten der Rundläufermaschine möglichst zuverlässig erfolgt.

Gemäß einer Ausführungsform ist das Verfahren dadurch gekennzeichnet, dass die Ausrichtvorrichtung die relative Position von Stator und Rotor zueinander in 6 Freiheitsgraden einstellt. So können nicht nur Fehler in der translatorischen Ausrichtung von Stator und Rotor zueinander behoben werden, sondern auch eine Ausrichtung dieser Bauteile zueinander in den Rotationsfreiheitsgraden erfolgen.

### Kurze Beschreibung der Figuren

- Fig. 1a-c: schematische Darstellung einer Behälterbehandlungsmaschine mit einer erfindungsgemäßen Vorrichtung,
- Fig. 2a-c: schematische Darstellung einer weiteren Ausführungsform der erfindungsgemäßen Vorrichtung.

### Ausführliche Beschreibung

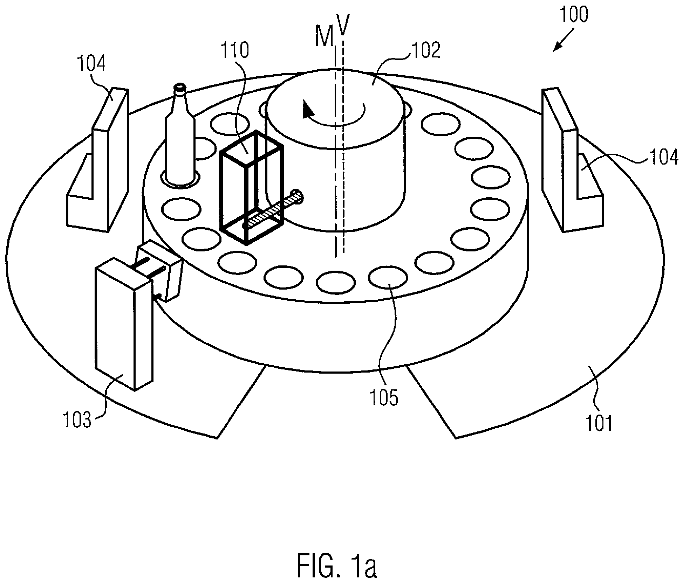

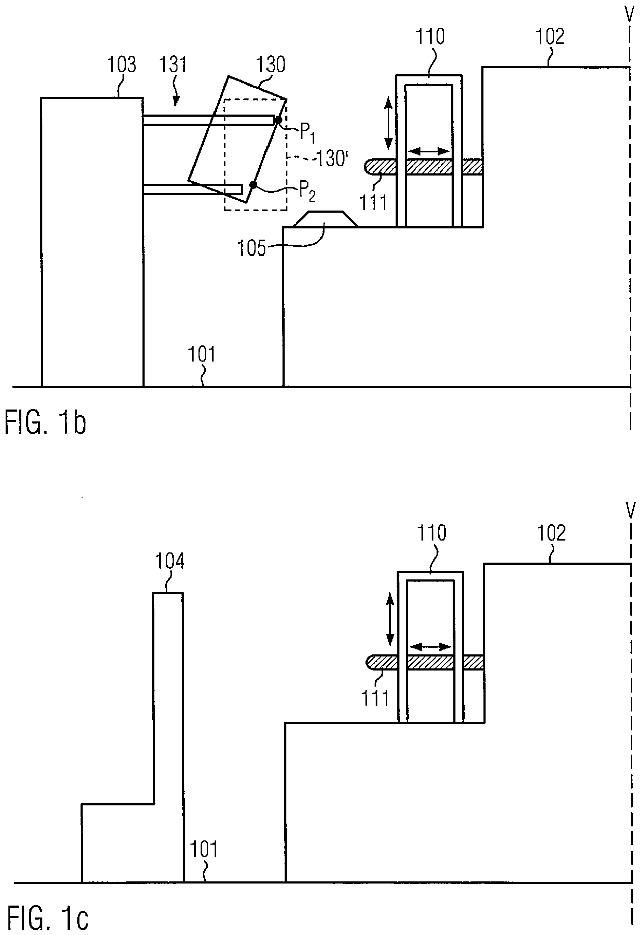

Fig. 1 zeigt eine Behälterbehandlungsmaschine 100 wie beispielsweise einer Direktdruckmaschine mit einer erfindungsgemäßen Vorrichtung. Die Behälterbehandlungsmaschine umfasst einen Stator 101 und einen Rotor 102. Es handelt sich um eine Rundläufermaschine bekannten Typs wie beispielsweise eine Direktdruckmaschine, eine Etikettiermaschine oder eine Blasformmaschine, wie sie hinlänglich bekannt sind. Die in Fig. 1a dargestellte Rundläufermaschine 100 ist eine Direktdruckmaschine und umfasst daher wenigstens einen auf dem Stator 101 angeordneten Druckkopf 103. Der Rotor 102 umfasst neben Behälterbehandlungsstationen 105, auf denen Behälter für das Behandeln in der Rundläufermaschine 100 positioniert werden können, einen Teil der erfindungsgemäßen Vorrichtung. Dieser Teil 110 beinhaltet einen Sensor. Dieser Sensor ist dazu geeignet, den Abstand zu ihn gegenüberliegenden Objekten zu bestimmen. Der Sensor bestimmt in dieser Ausführungsform der Vorrichtung wenigstens die Position zu einem Referenzelement 104, das am Stator 101 montiert ist. Durch die Bestimmung des Abstandes des Sensors zum Referenzelement 104 kann die Ausrichtung des Rotors 102 um dessen Rotationsachse V relativ zur Mittelachse M des Stators ermittelt werden. Muss der Abstand des Sensors zu dem Referenzelement beispielsweise vier Meter betragen für den Fall, dass der Rotor relativ zum Stator 101 korrekt ausgerichtet ist, so kann die Abweichung in der Entfernung zu einem Referenzelement 104 genutzt werden, um Rückschlüsse auf die korrekte Ausrichtung des Rotors zu ziehen. Die von dem Sensor so gewonnenen Messdaten können daher genutzt werden, um den Stator 101 relativ zum Rotor 102 richtig auszurichten. Besonders bevorzugt ist es, wenn auf dem Stator 101 beispielsweise in regelmäßigen Winkelabständen Referenzelemente 104 vorgesehen sind, zu denen der Sensor den Abstand bestimmen kann. So kann sichergestellt werden, dass die genaue relative Lage der Rotationsachse V zur Mittelachse M des Stators bekannt ist, wie hier in Fig. 1a schematisch dargestellt ist.

Der Sensor ist jedoch weiterhin auch so ausgebildet, dass er den Abstand zu anderen Komponenten der Behälterbehandlungsmaschine messen kann. Da gängige Direktdruckverfahren (oder andere Behälterbehandlungsverfahren) teils erhebliche Anforderungen an die Ausrichtung der Behälterbehandlungseinheiten, wie beispielsweise von Druckköpfen in Bezug zu den Behälterbehandlungsstationen 105, stellen, ist der Sensor ebenfalls geeignet, den Abstand zu entsprechenden Komponenten wie Druckköpfen 103 zu bestimmen. So kann sichergestellt werden, dass beispielsweise die Drückköpfe 103 oder alle anderen vorstellbaren Behälterbehandlungseinheiten den korrekten Abstand zum Rotor 102 und auch zu den in den Behälterbehandlungsstationen 105 vorgesehenen Behältern aufweisen.

Dazu zeigt Fig. 1b den Sensor 111 in einer schematischen Ansicht bei der Abstandsbestimmung zu einem Druckkopf 130. Der Druckkopf 130 selbst ist üblicherweise über Verbindungen 131 mit dem gesamten Druckkopfmodul 103 verbunden, indem beispielsweise Tintenvorlagebehälter untergebracht sein können. Durch die Verbindung 131 ist es ebenfalls üblicherweise möglich, den Druckkopf 130 zu drehen und beispielsweise gerade zu stellen, wie in der gestrichelt dargestellten Position 130' zu sehen ist. Beim Aufbau oder Umrüsten einer entsprechenden Behälterbehandlungsmaschine kann jedoch die anfängliche Ausrichtung der Druckkopfmodule von entscheidender Bedeutung für die Qualität der damit erzeugten Druckbilder auf Behältern sein. Sind die Druckköpfe gegenüber der eigentlich beabsichtigten Position gekippt, so kann sich dies nachteilig auf das erzeugte Druckbild auswirkt. Dazu wird der Sensor 111 genutzt, um, während die Rundläufermaschine stillsteht, den Abstand des Druckkopfes 130 zum Sensor 111 zu bestimmen.

Der Sensor kann dazu beispielsweise als pneumatisch betriebener Messtaster ausgebildet sein der ausgefahren werden kann, um den Druckkopf, beispielsweise an zwei Punkten P1 und P2 zu berühren. So kann zum Einen die exakte Entfernung des Druckkopfes 130 zum Sensorkopf bestimmt werden (bezogen auf seine ursprüngliche Position, wie sie in Fig. 1b dargestellt ist) und zum Anderen kann durch die Berührung an zwei unterschiedlich hoch gelegenen Punkten vermessen werden, ob der Druckkopf 130 gegenüber der bevorzugten Lage 130' schräggestellt ist. Dabei ist der Sensor 111 vorzugsweise in dem Gestell 110 vorgesehen, durch das er sowohl horizontal als auch vertikal bewegt werden kann. Der Sensor 111 kann jedoch auch als optischer Sensor oder als Ultraschallsensor ausgebildet sein oder einen entsprechenden umfassen. So kann verhindert werden, dass der Sensor 111 über Behälterbehandlungsstationen 105 hinweggefahren werden muss, was weiterhin den Vorteil liefert, dass der Sensor 111 die Position des Stators zum Rotor bzw. des Rotors zu den Behälterbehandlungselementen auch während des Betriebs der Rundläufermaschine bestimmen kann. So kann beispielsweise mittels eines Lasers, der als sich auf dem Rotor mitdrehender Sensor 111 ausgebildet ist, bei jeder Umdrehung der Abstand der Druckköpfe zur Rotationsachse V des Karussells bzw. des Rotors 102 bestimmt werden. Entsprechend vorgesehene Motoren können dann gegebenenfalls eine Nachjustage der Ausrichtung des Rotors 102 zum Stator 101 und den darauf angebrachten Druckkopfmodulen durchführen. Dazu werden die im Sensor oder durch den Sensor 111 gesammelten Daten, insbesondere Entfernungsdaten, genutzt.

Fig. 1c zeigt die Entfernungsbestimmung mittels des Sensors 111, der wie in Fig. 1b beschrieben ausgebildet sein kann, zu einem Referenzelement 104, das auf dem Stator 101 fest positioniert ist. Um eine korrekte Lagebestimmung des Rotors 102 in Bezug auf den Stator 101 zu erhalten muss die Positionierung der Referenzelemente 104 auf dem Stator 101 mit hoher Präzision erfolgen. Damit das Referenzelement 104 tatsächlich zur Bestimmung der Ausrichtung des Rotors 102 zum Stator 101 genutzt werden kann bzw. zur Bestimmung der Ausrichtung der Rotationsachse V des Rotors 102 und der Mittelachse M des Stators 101, wie in Fig. 1a dargestellt, ist es bevorzugt, das Referenzelement mit Bezug auf dessen beabsichtigte Position nur um wenige zehntel Millimeter bei der Befestigung am Stator 101 abweichend zu befestigen. Ist beispielsweise vorgesehen, dass das Referenzelement von der Mittelachse M des Stators 101 genau einen Meter entfernt ist, so sollte die tatsächliche Position des Referenzelements 104 nur um maximal 0,5 mm, bevorzugt maximal 0,2 mm und bevorzugt maximal weniger als 0,1 mm von der beabsichtigten Position abweichen. So kann sichergestellt werden, dass bei der Entfernungsmessung durch den Sensor, dessen Positionierung ebenfalls entsprechend akkurat erfolgen muss, hinreichend genau ist, um eine Positionierung des Rotors 102 und insbesondere dessen Rotationsachse V relativ zur Mittelachse M des Stators mit hoher Präzision zu gewährleisten. Somit wird durch die Entfernungsbestimmung des am Rotor 102 vorgesehenen Sensors 111 zu den Referenzelementen 104 auf dem Stator, eine genaue Ausrichtung in wenigstens drei Dimensionen möglich, sofern das Referenzelement 104 oder die Referenzelemente eine gerade Oberfläche, wie sie hier dargestellt ist, aufweist.

Es kann jedoch auch notwendig sein, eventuelle Rotationsfreiheitsgrade bei der Positionierung des Rotors 102 in Bezug auf den Stator 101 zu berücksichtigen.

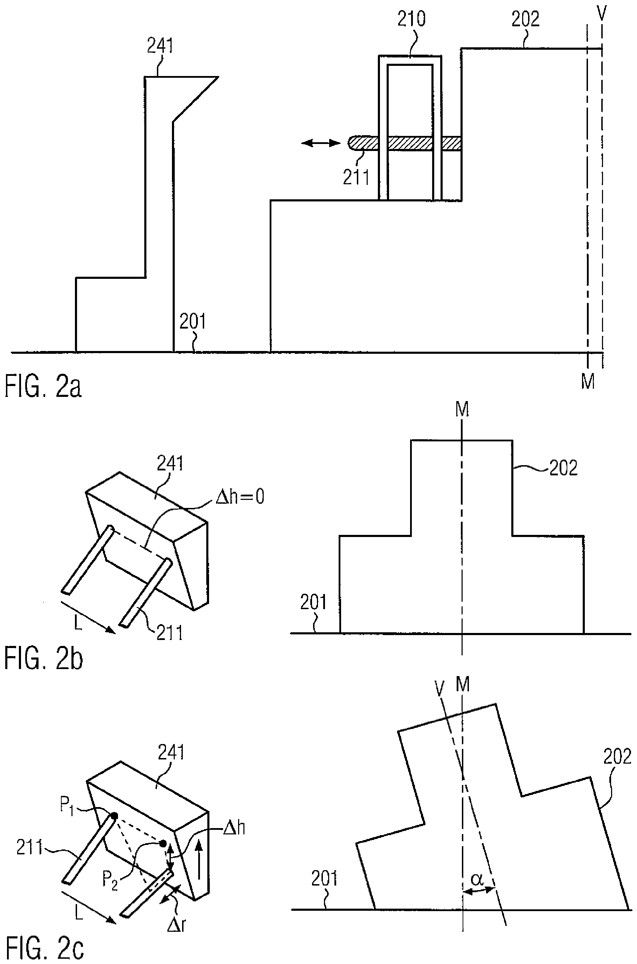

Dazu zeigt Fig. 2 eine weitere Ausführungsform der erfindungsgemäßen Vorrichtung, wobei auch hier der Sensor 211 mit seinem Gestell 210 am Stator 202 vorgesehen ist und ein Referenzelement 204 gemäß einer weiteren Ausführungsform auf dem Stator 201 angeordnet ist. Das Referenzelement 204 unterscheidet sich vom Referenzelement 104, wie es in Fig. 1 dargestellt wurde, durch die abgeschrägte Oberfläche 241, in der das Referenzelement 204 in Kontakt mit dem Sensor 211 tritt. Diese abgeschrägte Oberfläche erlaubt es, zusätzlich zur Bestimmung der Entfernung des Sensors 211 zu den Referenzelementen 204 eventuelle Verkippungen der Rotationsachse V des Rotors zur Mittelachse M des Stators darzustellen.

Dazu zeigen Fig. 2b und c zwei unterschiedliche Fälle der Ausrichtung von Rotationsachse V des Rotors 202 zur Mittelachse M des Stators 201. In Fig. 2b sind Rotationsachse V und Mittelachse M korrekt ausgerichtet. Wird der Sensor 211 in einem solchen Fall durch Drehung des Rotors 202 entlang der Oberfläche des Referenzelements 241 bewegt, so ändert sich die Höhe des Sensors 211 in Relation zur Oberfläche des Referenzelements 241 nicht. Die Höhendifferenz Δh ist gleich Null. Dies wird durch die gestrichelte Linie angedeutet. In einem solchen Fall stimmen die Rotationsachse V und die Mittelachse in ihren Rotationsfreiheitsgraden zueinander überein. Das heißt, sie sind parallel zueinander. Ist mehr als ein Referenzelement 204 vorgesehen, kann durch weitere Drehung des Rotors 202 und Entfernungsbestimmung von Sensor 211 zum Referenzelement 204 auch der Abstand zwischen Rotationsachse V und Mittelachse M bestimmt werden. In dem in Fig. 2b dargestellten Beispiel ist diese Abweichung jedoch aus Zwecken der Anschaulichkeit gleich Null.

Sind die Rotationsachse V und die Mittelachse M jedoch nicht parallel sondern schließen wenigstens einen von Null verschiedenen Winkel α ein, wie in Fig. 2c dargestellt, so liefert die Entfernungsbestimmung des Sensors zur Oberfläche des Referenzelements 241 in dieser Ausführungsform ein anderes Ergebnis. Rotiert der Rotor 202 um die Rotationsachse V und bewegt damit den Sensor 211 entlang der Oberfläche des Referenzelements über die Entfernung L von Punkt P1 nach Punkt P2, so ergibt sich aufgrund der relativen Schrägstellung der Rotationsachse V zur Mittelachse M um den Winkel α ein Höhenversatz Δh bei Entlanglaufen des Sensors 211 an der Oberfläche des Referenzelements 241. Dieser Versatz wäre auch bei einem Referenzelement 204 gemäß der Ausführungsform, wie sie in Fig. 1 dargestellt ist, zu beobachten. Jedoch erlaubt es die angeschrägte Oberfläche 241 aus dieser Höhendifferenz Δh eine Änderung der Entfernung Δr der Oberfläche des Referenzelements zum Sensor 211 in den Punkten P1 und P2 festzustellen. Diese kann genutzt werden bei bekannter Oberflächenstruktur des Referenzelements 204 den Winkel α zu bestimmen und so durch austarieren des Rotors 202 relativ zum Stator 201 eine korrekte Ausrichtung auch in den Rotationsfreiheitsgraden zu gewährleisten. Da der Rotor 202 in der Regel nur um eine einzige Achse rotieren sollte, genügt es, wenn auf diese Art und Weise eine Bestimmung der Ausrichtung des Rotors 202 relativ zum Stator 201 in vier Freiheitsgraden, also drei translatorischen Freiheitsgraden und einem Rotationsfreiheitsgrad erzielt werden kann. Es kann jedoch auch, je nach Ausbildung der Behälterbehandlungsmaschine vorgesehen sein, die Lage der Rotationsachse V relativ zur Mittelachse M in drei translatorische Freiheitsgraden und drei Rotationsfreiheitsgraden bestimmen zu können.

Sind die Abstände von Rotor zu Stator durch Messen der Abstände des Sensors zu den Referenzelementen oder nur zu dem Referenzelement bekannt, so kann der Rotor relativ zum Stator ausgerichtet werden. Da der Sensor 211 auch in der Lage ist, die Ausrichtung von Behälterbehandlungseinheiten wie beispielsweise Druckkopfmodulen zu bestimmen, kann eine weitere Änderung der Ausrichtung des Rotors oder aber eine Justage der Behälterbehandlungseinheiten relativ zur Ausrichtung von Stator und Rotor auf Grundlage der vom Sensor 211 gemessenen Daten erfolgen. So kann mit diesen Daten eine Reihe von im Stator und/oder im Rotor vorgesehenen Motoren angesteuert werden, die beide Bauteile, also Stator und Rotor, zueinander ausrichten. Die Behälterbehandlungseinheiten, wie beispielsweise Druckkopfmodule, verfügen meist selbst über eigene Motoren. So sind in Druckkopfmodulen meist Motoren zur Ausrichtung der einzelnen Druckköpfe in Bezug auf die Oberfläche der Behälter in den Rundläufermaschinen vorgesehen. Eine entsprechende Steuereinheit kann daher vorgesehen sein, die Messdaten des Sensors zur Ansteuerung der Motoren der Druckköpfe nutzt, um diese entsprechend den Anforderungen der Positionierung relativ zum Rotor auszurichten.

Auf diese Weise kann nicht nur sichergestellt werden, dass der gesamte Stator relativ zum Rotor korrekt ausgerichtet ist und es hier nicht zu periodischen Abstandsschwankungen kommen kann sondern ferner kann sichergestellt werden, dass die einzelnen Behälterbehandlungsmodule zu jeder Behälterbehandlungsstation den korrekten Abstand und die korrekte Ausrichtung aufweisen.

Auch wenn die erfindungsgemäße Vorrichtung zum Ausrichten der Komponenten der Rundläufermaschine zueinander genutzt werden kann, ist sie weiterhin in vorteilhafterweise geeignet, den ständigen Betrieb der Rundläufermaschine zu überwachen. Dies gilt jedoch nur, wenn die Entfernungsbestimmung berührungslos stattfindet, da ansonsten Kollisionen mit in der Rundläufermaschine transportierten Behältern auftreten könnten. ist der Sensor als optischer oder als Ultraschallsensor ausgebildet, kann während des gesamten Betriebs eine Überwachung der Ausrichtung aller Komponenten, die von dem Sensor durch Drehung um die Rotationsachse V des Rotors erfasst werden können, bestimmt werden. Kommt es aufgrund von beispielsweise Vibrationen beim Betrieb der Rundläufermaschine zu Veränderungen des Abstands oder der Ausrichtung von einer oder mehrerer Komponente/n der Rundläufermaschine, so kann der optische Sensor hier als Indikator für solche Abweichungen dienen, indem er bei jedem Umlauf des Rotors den Abstand zu jeder Komponente und zu jedem Referenzelement misst. Die so gewonnen Daten können genutzt werden, um beispielsweise in Echtzeit eine Ausrichtung der Druckköpfe zu ermöglichen. Es ist in einem solchen Fall bevorzugt, wenigstens zwei Sensoren vorzusehen, die in dem beispielsweise in Fig. 1c dargestellte Gestell 110 übereinander angeordnet sind. So kann eine Bestimmung der Entfernung der Komponenten der Rundläufermaschine zueinander in zwei Dimensionen gleichzeitig erfolgen, was beispielsweise das Verkippen von Druckköpfen, wie in Fig. 1b dargestellt, detektierbar macht. Die Messwerte des Sensors können auch genutzt werden, um hier das Überschreiten von etwaigen Toleranzen in Echtheit aufzuzeichnen und die Steuereinheit kann die gewonnenen Werte gegebenenfalls zur Ausrichtung beweglicher Komponenten in Echtzeit nutzen. Das Vorsehen zweier Sensoren wie hier beschrieben kann grundsätzlich in jeder Ausführungsform vorteilhaft sein.

Da die absoluten Fehler der Ausrichtungen von Komponenten oder von Stator und Rotor zueinander in den meisten Fällen nur im Millimeterbereich liegen werden, sind insbesondere Stellantriebe und hier insbesondere Aktuatoren bevorzugt. Diese ermöglichen sehr präzise ansteuerbare Bewegungen, auch auf kleinen Skalen, wie im Millimeterbereich. Außerdem ermöglicht die elektronische Ansteuerbarkeit eine sehr schnelle Reaktion auf die Messwerte des Sensors.

Auch wenn die Vorrichtung zum Ausrichten von Komponenten einer Rundfäufermaschine hier im Wesentlichen als automatisch arbeitende Vorrichtung beschrieben wurde, die anhand der gewonnen Messwerte eine Neuausrichtung von Komponenten zueinander ermöglicht, können die vom Sensor gewonnenen Werte ebenso von einem Bediener genutzt werden, um Feineinstellungen beispielsweise an den Komponenten der Rundläufermaschine oder an dem Rotationsverhalten des Rotors durchzuführen.

## Patentansprüche

1. Vorrichtung zum Ausrichten von Komponenten (103) einer Rundläufermaschine (100), wie beispielsweise einer Behälterbehandlungsmaschine, wobei die Rundläufermaschine einen Stator (101) und einen Rotor (102), sowie wenigstens eine, am Stator (101) angeordnete Komponente (103) umfasst, wobei die Vorrichtung wenigstens ein Referenzelement (104), das am Stator (101) angeordnet ist, und einen Sensor (111), der am Rotor mitdrehbar angeordnet ist, umfasst, wobei der Sensor geeignet ist, den Abstand zum Referenzelement (104) und zu der Komponente (103) zu messen und Stator und Rotor zueinander, basierend auf den vom Sensor gemessenen Werten, ausgerichtet werden können, wobei wenigstens eine Ausrichtvorrichtung vorgesehen ist, die geeignet ist, eine relative Position des Stators (101) zum Rotor (102) durch relative Bewegung von Stator und Rotor zueinander zu ändern.

2. Vorrichtung nach Anspruch 1, **dadurch gekennzeichnet, dass** der Sensor (111) den Abstand zwischen Sensor und Referenzelement (104) und/oder Komponente (103) bestimmen kann während die Rundläufermaschine stillsteht oder der Rotor der Rundläufermaschine bewegt wird.

3. Vorrichtung nach Anspruch 1 oder 2, **dadurch gekennzeichnet, dass** der Sensor wenigstens eines von einem pneumatisch betriebenen Messtaster, einem optischen Sensor, einem Ultraschallsensor umfasst.

4. Vorrichtung nach einem der Ansprüche 1 bis 3, **dadurch gekennzeichnet, dass** die Ausrichtung von Stator (101) und Rotor (102) zueinander manuell oder automatisch erfolgen kann.

5. Vorrichtung nach einem der Ansprüche 1 bis 4, **dadurch gekennzeichnet, dass** eine Vielzahl von Referenzelementen (104) am Stator (101) angeordnet ist.

6. Vorrichtung nach einem der Ansprüche 1 bis 5, **dadurch gekennzeichnet, dass** die Rundläufermaschine eine Etikettiermaschine oder eine Blasformmaschine oder eine Direktdruckmaschine oder ein Füller oder eine Inspektionsmaschine ist.

7. Vorrichtung nach Anspruch 1, **dadurch gekennzeichnet, dass** die Ausrichtvorrichtung die relative Position von Stator (101) und Rotor (102) zueinander in 6 Freiheitsgraden verändern kann.

8. Verfahren zum Ausrichten von Komponenten einer Rundläufermaschine (100), die einen Stator (101) und einen Rotor (102) und wenigstens eine Komponente (103) umfasst, wobei das Verfahren ein Positionieren eines Sensors (111), der mitdrehbar am Rotor angeordnet ist, auf ein am Stator (101) angeordnetes Referenzelement (104) und eine am Stator angeordnete Komponente umfasst, und wobei das Verfahren das Messen eines Abstandes zwischen dem Sensor (111) und dem Referenzelement (104) und eines Abstandes zwischen dem Sensor (111) und der Komponente (103) umfasst, und wobei Stator und Rotor zueinander, basierend auf den vom Sensor gemessenen Werten ausgerichtet werden, wobei eine relative Position des Stators (101) zum Rotor (102) durch eine Ausrichtvorrichtung durch relative Bewegung von Stator und Rotor zueinander verändert wird.

9. Verfahren nach Anspruch 8, **dadurch gekennzeichnet, dass** der Sensor (111) den Abstand zum Referenzelement (104) und/oder der Komponente (103) bestimmt, während der Rotor stillsteht oder während der Rotor sich bewegt.

10. Verfahren nach Anspruch 8 oder 9, **dadurch gekennzeichnet, dass** das Ausrichten von Stator (101) und Rotor (102) zueinander manuell oder automatisch erfolgt.

11. Verfahren nach einem der Ansprüche 8 bis 10, **dadurch gekennzeichnet, dass** der Sensor (111) einen Abstand zu einer Vielzahl von Referenzelementen (104) bestimmt.

12. Verfahren nach einem der Ansprüche 8 bis 11, **dadurch gekennzeichnet, dass** der Sensor (111) einen Abstand zu jedem Referenzelement (104) und/oder jeder Komponente (103) in wenigstens 2 Dimensionen bestimmt.

13. Verfahren nach einem der Ansprüche 8 bis 12, **dadurch gekennzeichnet, dass** die Ausrichtvorrichtung die relative Position von Stator (101) und Rotor (102) zueinander in 6 Freiheitsgraden einstellt.

## Claims

1. Device for adjustment of components (103) of a rotary machine (100), such as for instance a container treatment machine, wherein the rotary machine comprises a stator (101) and a rotor (102), and also at least one component (103) which is arranged on the stator (101), wherein the device comprises at least one reference element (104) which is arranged on the stator (101) and a sensor (111) which is arranged on the rotor so as to rotate with the rotor, wherein the sensor is suited to measure the distance from the reference element (104) and from the component (103), and stator and rotor can be adjusted in relation to each other based on the values measured by the sensor, wherein at least one adjustment device is provided which is suited to change a relative position of the stator (101) to the rotor (102) by a relative motion of stator and rotor in relation to each other.

2. Device according to claim 1, **characterized in that** the sensor (111) can determine the distance between sensor and reference element (104) and/or component (103) while the rotary machine is at a standstill or the rotor of the rotary machine is moved.

3. Device according to claim 1 or 2, **characterized in that** the sensor comprises at least one of a pneumatically operated measuring gauge, an optical sensor, and an ultrasonic sensor.

4. Device according to one of claims 1 to 3, **characterized in that** the adjustment of stator (101) and rotor (102) relative to each other can be done manually or automatically.

5. Device according to one of claims 1 to 4, **characterized in that** a plurality of reference elements (104) is arranged on the stator (101).

6. Device according to one of claims 1 to 5, **characterized in that** the rotary machine is a labeling machine or a blow molding machine or a direct printing machine or a filler or an inspection machine.

7. Device according to claim 1, **characterized in that** the adjustment device can change the relative position of stator (101) and rotor (102) in relation to each other in 6 degrees of freedom.

8. Method for adjusting components of a rotary machine (100) comprising a stator (101) and a rotor (102) and at least one component (103), wherein the method comprises positioning a sensor (111), which is arranged on the rotor so as to rotate with the rotor, on a reference element (104) which is arranged on the stator (101) and a component which is arranged on the stator, and wherein the method comprises measuring a distance between the sensor (111) and the reference element (104) and a distance between the sensor (111) and the component (103), and wherein stator and rotor are adjusted in relation to each other based on the values measured by the sensor, wherein a relative position of the stator (101) to the rotor (102) is changed by an adjustment device by a relative motion of stator and rotor in relation to each other.

9. Method according to claim 8, **characterized in that** the sensor (111) determines the distance from the reference element (104) and/or the component (103) while the rotor is at a standstill or while the rotor is moving.

10. Method according to claim 8 or 9, **characterized in that** the adjustment of stator (101) and rotor (102) relative to each other is done manually or automatically.

11. Method according to one of claims 8 to 10, **characterized in that** the sensor (111) determines a distance from a plurality of reference elements (104).

12. Method according to one of claims 8 to 11, **characterized in that** the sensor (111) determines a distance from each reference element (104) and/or each component (103) in at least two dimensions.

13. Method according to one of claims 8 to 12, **characterized in that** the adjustment device adjusts the relative position of stator (101) and rotor (102) in relation to each other in 6 degrees of freedom.

## Revendications

1. Dispositif pour ajuster le positionnement de composants (103) d'une machine à plateau rotatif (100), comme par exemple une machine de traitement de contenants, la machine à plateau tournant comportant un stator (101) et un rotor (102), ainsi qu'au moins un composant (103) agencé sur le stator (101), le dispositif comprenant au moins un élément de référence (104), qui est agencé sur le stator (101), et un capteur (111), qui est agencé sur le rotor en pouvant tourner avec lui, dispositif
dans lequel le capteur est adapté à mesurer la distance à l'élément de référence (104) et au composant (103), et le stator et le rotor peuvent être ajustés l'un par rapport à l'autre en se basant sur les valeurs mesurées par le capteur, et
dans lequel il est prévu au moins un dispositif d'ajustement de position, qui est adapté à faire varier une position relative du stator (101) par rapport au rotor (102), par un mouvement de déplacement relatif du stator et du rotor l'un par rapport à l'autre.

2. Dispositif selon la revendication 1, **caractérisé en ce que** le capteur (111) est en mesure de déterminer la distance entre le capteur et l'élément de référence (104) et/ou des composants (103), pendant l'arrêt de la machine à plateau rotatif ou pendant que le rotor de la machine à plateau rotatif est en mouvement.

3. Dispositif selon la revendication 1 ou la revendication 2, **caractérisé en ce que** le capteur comprend au moins l'un parmi les éléments suivants, à savoir un palpeur de mesure à fonctionnement pneumatique, un capteur optique, un capteur à ultrasons.

4. Dispositif selon l'une des revendications 1 à 3, **caractérisé en ce que** l'ajustement de positionnement du stator (101) et du rotor (102) l'un par rapport à l'autre peut être effectué manuellement ou de manière automatique.

5. Dispositif selon l'une des revendications 1 à 4, **caractérisé en ce qu'**un grand nombre d'éléments de référence (104) sont agencés sur le stator (101).

6. Dispositif selon l'une des revendications 1 à 5, **caractérisé en ce que** la machine à plateau tournant est une machine d'étiquetage ou une machine de formage ou moulage par soufflage, ou bien une machine d'impression directe ou encore un dispositif de remplissage ou une machine d'inspection.

7. Dispositif selon la revendication 1, **caractérisé en ce que** le dispositif d'ajustement de position est en mesure de faire varier la position relative du stator (101) et du rotor (102) l'un par rapport à l'autre, selon six degrés de liberté.

8. Procédé pour ajuster le positionnement de composants d'une machine à plateau rotatif (100), qui comporte un stator (101) et un rotor (102), ainsi qu'au moins un composant (103), le procédé comprenant un positionnement d'un capteur (111), qui est agencé sur le rotor en pouvant tourner avec lui, relativement à un élément de référence (104) agencé sur le stator (101) et à un composant agencé sur le stator, et le procédé comprenant la mesure d'une distance entre le capteur (111) et l'élément de référence (104) et d'une distance entre le capteur (111) et le composant (103), procédé d'après lequel le stator et le rotor sont ajustés en position l'un par rapport à l'autre en se basant sur les valeurs mesurées par le capteur, et d'après lequel une position relative du stator (101) par rapport au rotor (102) est modifiée par un dispositif d'ajustement de position, par un mouvement de déplacement relatif du stator et du rotor l'un par rapport à l'autre.

9. Procédé selon la revendication 8, **caractérisé en ce que** le capteur (111) détermine la distance à l'élément de référence (104) et/ou au composant (103), pendant l'arrêt du rotor ou pendant que le rotor est en mouvement.

10. Procédé selon la revendication 8 ou la revendication 9, **caractérisé en ce que** l'ajustement de positionnement du stator (101) et du rotor (102) l'un par rapport à l'autre, est effectué manuellement ou de manière automatique.

11. Procédé selon l'une des revendications 8 à 10, **caractérisé en ce que** le capteur (111) détermine une distance à un grand nombre d'éléments de référence (104).

12. Procédé selon l'une des revendications 8 à 11, **caractérisé en ce que** le capteur (111) détermine une distance à chaque élément de référence (104) et/ou à chaque composant (103) dans au moins deux dimensions.

13. Procédé selon l'une des revendications 8 à 12, **caractérisé en ce que** le dispositif d'ajustement de position règle la position relative du stator (101) et du rotor (102) l'un par rapport à l'autre, selon six degrés de liberté.
